# EUROPÄISCHE PATENTSCHRIFT

(11) **EP 1 690 744 B1**
(45) Veröffentlichungstag und Bekanntmachung des Hinweises auf die Patenterteilung: **18.04.2007**
(21) Anmeldenummer: 06001382.8
(22) Anmeldetag: 24.01.2006
(51) Int. Cl.: B60R 13/08, F02B 77/11

(54) **Abschirmteil, insbesondere Hitzeschild**
Shielding device, particularly a heat shield
Dispositif de blindage, notamment un ecran de protection thermique

(30) Priorität: 11.02.2005 DE 102005006319
(43) Veröffentlichungstag der Anmeldung: 16.08.2006
(73) Patentinhaber: ElringKlinger AG, 72581 Dettingen/Erms (DE)
(72) Erfinder: Hofmann, Dieter, 91452 Wilhelmsdorf (DE); Ell, Bernd, 90613 Grosshabersdorf (DE)
(74) Vertreter: Bartels & Partner

(56) Entgegenhaltungen:
- EP-A- 0 857 864
- DE-A1- 19 522 895
- DE-C1- 10 134 084
- US-A- 5 555 932

## Beschreibung

Die Erfindung betrifft ein Abschirmteil, insbesondere Hitzeschild für Verbrennungsmotoren, bestehend aus mindestens zwei Schildteilen, die mittels einer Verbindungseinrichtung miteinander verbindbar sind.

Während die Wärmeentwicklung, beispielsweise eines sparsamen leistungsoptimierten Dieselmotors, am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunstoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Jedenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.72, Seite 1044ff).

Durch die DE 102 47 641 B3 ist ein Abschirmteil bekannt, insbesondere in Form eines schalldämpfenden Strukturbauteiles, als Bauteil eines Kraftfahrzeuges. Um bei dem bekannten Abschirmteil die Schalldämmung zu verbessern, weist dieses einen Schirmkörper mit einem Basisrand als Schirmteil auf, das randseitig über winkelförmige Bügelschenkel innerhalb des Motorraumes an dortigen feststehenden Teilen festlegbar ist und thermische Motorenkomponenten gegenüber wärmeempfindlichen Baukomponenten abschirmt.

Der Schirmteil ist bei der bekannten Lösung in einem Mittenbereich U-förmig gewölbt, und ist im übrigen dahingehend symmetrisch aufgebaut. Der U-förmig gewölbte Mittenbereich geht randseitig in Randbereiche stärkere Krümmung über, wobei an den beiden einander gegenüberliegenden Randbereichen die winkelförmigen Bügel als Festlegemittel nachträglich angebracht sind. Das Schirmteil besteht aus zwei Metallblechlagen, zwischen denen sich eine schalldämmende und/oder wärmedämmende Dämmschicht erstreckt und zum Festlegen der Blechdecklagen aneinander dient eine Bördelung, bei der der freie Bördelrand der einen Decklage, den Randbereich der anderen Decklage flächig umfaßt. Um Gewicht zu sparen, kann das Schirmteil aus Aluminium oder aus einem sonstigen Leichtmetallwerkstoff aufgebaut sein.

Die bekannte Lösung dient vorzugsweise der Abschirmung einer Kupplung zwischen einem Getriebeflansch und einer Kardanwelle von vom Getriebe kommenden Körperschall, sowie einer dauerhaften Beeinflussung der Temperaturstrahlung eines benachbart verlaufenden Abgasrohres.

Zwar finden Kraftfahrzeugmotoren gleicher Bauart heutzutage in einer Vielzahl von unterschiedlichen Fahrzeugen ihre Anwendung; aufgrund der Applikationen der Motoren werden aber zusehends modifizierte Anbauteile notwendig, da deren Gestaltung größtenteils durch die Gesamt-Einbausituation (Fahrzeugchassis) beeinflußt wird. So ist beispielsweise der Aufbau und die Gestaltung eines Abgassystemes abhängig vom Motortyp, der zu erreichenden Leistung und der zu erreichenden Abgasklassifizierung gemäß gesetzlicher Vorschriften. Hierdurch ergieben sich oftmals für einen Motor mehrere ähnliche, aber von der Geometrie her unterschiedlich dimensionierte Einzelkomponentensysteme, insbesondere in Form von Abgassystemen mit Katalysator, wie sie heute bei modernen Dieselmotoren gleichfalls Anwendung finden in Form sogenannter "Rußpartikelbrenner".

Setzt man nun die vorstehend beschriebenen bekannten Lösungen für dahingehende Anwendungen ein, ist oftmals für jeden Motor und/oder seine Komponenten, wie Abgassysteme jeweils ein von der Geometrie her unterschiedliches Hitzeschildteil zu entwickeln und zu formen, was den Herstell-aufwand erhöht und mithin die Kosten. Auch kommt es aufgrund der sich hieraus ergebenden Teilevielfalt an Schildteilen in Produktionslinien von Kraftfahrzeugen zu einem erhöhten Aufwand, insbesondere durch die damit einhergehende Mehrarbeit, bezogen auf die Teileverwaltung und deren Bevorratung. Ferner sind Verwechslungen zwischen den Teilen nicht ausgeschlossen, insbesondere wenn diese im Rahmen späterer Wartungsarbeiten gegen Neuteile zu tauschen sind. An der dahingehenden Problematik ändert sich auch grundsätzlich nichts, wenn insbesondere bei großaufbauenden Abschirmteilen mehrere Einzelhitzeschildteile über konventionelle Verbindungseinrichtungen miteinander verbunden sind, wie Schraubverbindungen oder Federklammern.

Eine derartige Lösung ist aus der EP 0 857 864 A1 bekannt. Diese Druckschrift offenbart ein Hitzeschild mit Schildteilen, die mittels einer Verbindungseinrichtung miteinander verbindbar sind, wobei die Verbindungseinrichtung eine Führungseinrichtung aufweist, die es ermöglicht, eine relative Lageeinstellung der einzelnen Schildteile zueinander vorzunehmen sowie die Schildteile in der eingestellten Lage festzulegen. Hierbei ist die Führungseinrichtung so gestaltet, dass für die Schildteile eine relative Lageeinstellung in eine Gebrauchsstellung und eine Montagestellung ermöglicht wird.

Ausgehend von diesem Stand der Technik liegt der Erfindung die Aufgabe zugrunde, die bekannten Lösungen unter Beibehalten ihrer Vorteile nämlich eine sehr gute Schall- und Wärmeisolation sicherzustellen, dahingehend weiter zu verbessern, dass Herstellung, Montage und Wartung vereinfacht sind bei entsprechender Kostenreduktion. Eine dahingehende Aufgabe löst ein Abschirmteil mit den Merkmalen des Patentanspruches 1 in seiner Gesamtheit.

Nach dem kennzeichnenden Teil des Anspruches 1 besteht die Besonderheit der Erfindung darin, dass die Führungseinrichtung in einem der Schildteile mindestens eine Bewegungsbahn zur Verfügung stellt, längs der ein entsprechendes Führungsteil eines anderen, insbesondere benachbarten Schildteiles verfahrbar ist, wobei die jeweilige Bewegungsbahn aus einer Langlochführung besteht, die von dem zuordenbaren Führungsteil durchgriffen ist, das mit einem Überstand an seinem einen Ende das Langloch der Führung übergreift und das mit seinem anderen Ende im anderen weiteren Schildteil gehalten ist. Im Unterschied zu der letzterwähnten bekannten Lösung, bei der lediglich die Lageeinstellung in eine Montagestellung oder Gebrauchsstellung möglich ist, wird erfindungsgemäß eine wählbare Lageeinstellung der Schildteile zueinander ermöglicht, so dass gewünschte, unterschiedliche Konfigurationen möglich sind, so dass bei einem Hitzeschild, aus mehreren Schildteilen bestehend, vor Ort eine Anpassung an die geometrischen Verhältnisse von Motoren und deren Anbauteilen einschließlich Abgassystemen möglich ist, wobei sich dann in einem weiten Bereich mit nur einem Abschirmteil und seinen Schildteilen, eine wirksame Schall- und Wärmeisolation herstellen läßt.

Die erfindungsgemäße Lösung ist dadurch charakterisiert, dass mit nur wenigen Handgriffen insbesondere eine Vergrößerung oder Verkleinerung der Schildteile zueinander über die Führungseinrichtung als Teil der Verbindungseinrichtung möglich ist, so dass insbesondere eine sehr gute Längenanpassung an die jeweils abzuschirmenden Teile erreicht ist. Es besteht die Möglichkeit das erfindungsgemäße Abschirmteil mit seinen einzelnen Schildteilen schon vor der Montage in der Größe an die Gegebenheiten anzupassen, oder aber eine dahingehende Anpassung unmittelbar in der Montagelinie vorzunehmen, da die Führungseinrichtung eine sehr rasche relative Lageeinstellung zwischen den Schildteilen ermöglicht. Mit der erfindungsgemäßen Lösung ist eine Art Baukasten an Schildteilen realisierbar, der in einem breiten Rahmen Anpassungsmöglichkeiten erlaubt und die Teilevielfalt reduzieren hilft, so dass insgesamt in der Entwicklung bei der Werkzeugerstellung und Verwaltung der Teile, der Arbeits- und Kostenaufwand deutlich reduziert ist und früher auftretende etwaige Fehler durch Verwechslungen sind auch über den Lebenszyklus der Teile gesehen, dergestalt vermeidbar.

Bei einer bevorzugten Ausführungsform des erfindungsgemäßen Abschirmteiles ist das in der betreffenden Langlochführung geführte Führungsteil aus einer Schraube, einem Niet- oder einem Gewindebolzen gebildet, die mit einem Kopf oder einer Gewindemutter versehen, den Überstand bilden.

In der Montage hat es sich als besonders vorteilhaft erwiesen, wenn das eine Schildteil mit seiner Langlochführung das andere Schildteil randseitig übergreift und dergestalt eine Anschlagbegrenzung ausbildet, was die Möglichkeit eröffnet, die jeweilige Bewegungsbahn in Form des Langloches zu entlasten, indem bei einer Verkleinerung der Schildmaße das eine Schildteil randseitig schon an die Anschlagbegrenzung des anderen Schildteiles anstößt, bevor das jeweilige Führungsteil (Schraube, Niet etc.) das Ende der Langlochführung erreicht. Dergestalt ist ein Ausreißen der Langlochführung in jeder relativen Lage der Schildteile gegeneinander ausgeschlossen.

Weitere vorteilhafte Ausführungsformen des erfindungsgemäßen Abschirmteiles sind Gegenstand der sonstigen Unteransprüche.

Im folgenden wird das erfindungsgemäße Abschirmteil anhand eines Ausführungsbeispieles nach der Zeichnung näher erläutert.

Dabei zeigen in prinzipieller und nicht maßstäblicher Darstellung die
- Fig. 1: eine perspektivische Außenansicht auf das Abschirmteil;
- Fig. 2: eine perspektivische Innenansicht auf das Abschirmteil nach der Fig. 1.

Das in den Figuren dargestellte Abschirmteil betrifft insbesondere ein Hitzeschild, bestehend aus zwei Schildteilen 10, 12. Die dahingehend beiden Schildteile 10, 12 sind mittels einer als Ganzes mit 14 bezeichneten Verbindungseinrichtung miteinander verbunden. Die Verbindungseinrichtung 14 weist eine Führungseinrichtung 16 auf, die eine relative Lageeinstellung der einzelnen Schildteile 10, 12 zueinander ermöglicht, sowie dem Festlegen in der jeweils eingestellten Lage dient.

Die Führungseinrichtung 16 in dem oberen Schildteil 10, weist eine Art Bewegungsbahn auf, längs der das andere untere Schildteil 12 mit mindestens einem Führungsteil verfahrbar ist. Wie die Figuren weiter zeigen, greift das jeweilige Führungsteil in die zuordenbare Bewegungsbahn ein und bildet ein Festlegemittel aus zum Festlegen der Schildteile 10,12 in ihrer jeweils zueinander eingenommenen relativen Lage.

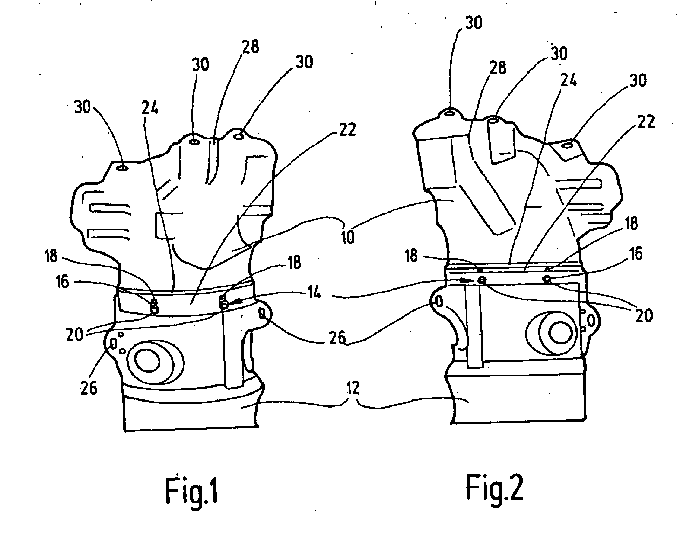

Bei der in der Figur 1 und 2 gezeigten Ausführungsform besteht die jeweilige Bewegungsbahn aus einer Langlochführung 18, die von dem zuordenbaren Führungsteil durchgriffen ist. Hierzu übergreift das jeweilige Führungsteil mit einem endseitigen Überstand das Langloch der Führung im Schildteil 10 und ist mit seinem anderen Ende im anderen weiteren Schildteil 12 (vgl. Fig. 2) gehalten. Vorzugsweise besteht dabei das Führungsteil aus einer Schraube 20 oder einem Niet, wobei ein jeweils endseitig angeordnetes Kopfteil den genannten Überstand bildet. Bei der erfindungsgemäßen Anordnung besteht zum einen die Möglichkeit, die Verbindung derart zu wählen, das in der Art eines Reibschlusses mit geringem Kraftaufwand die beiden Hitzeschilder gegeneinander bewegbar sind; es besteht aber auch die Möglichkeit einer zunächst losen Verbindung der Schildteile 10, 12 aneinander und vor Ort, insbesondere am Ort der Montage wird dann nach Einnahme der relativen Lage der Schildteile 10, 12 zueinander eine kraftschlüssige feste Verbindung zwischen diesen über das jeweilige Führungsteil als Teil der Verbindungseinrichtung 14 hergestellt. Sofern eine reibschlüssige Verbindung ins Auge gefaßt ist, erlaubt dies gegebenenfalls eine Kompensation des Wärmeausdehnungsverhaltens der einzelnen Hitzeschilder in Form der Schildteile 10, 12, so dass sich dergestalt ein thermischer Ausgleich erreichen läßt, indem bei einer Ausdehnung die Teile 10, 12 sich zwanglos gegeneinander bewegen können und dennoch aneinander festgelegt sind.

Wie die Figuren 1 und 2 des weiteren zeigen, sind die Schildteile 10, 12 in der Art von schalenförmigen Abdeckhauben ausgebildet, die im verbauten Zustand eine gemeinsame Längsausrichtung aufweisen entlang der sich parallel angeordnet, die jeweilige Bewegungsbahn in Form der Langlochführungen 18 erstreckt, insbesondere sind die beiden Langlochführungen 18 im randseitigen Bogenbereich beidseitig eines Mittensattels der Schildteile 10, 12 angeordnet, und erlauben so in axialer oder in Längsausrichtung gesehen eine Vergrößerung oder Verkleinerung des Abschirmteiles, indem man die Schildteile 10, 12 entlang ihrer Langlochführungen 18 voneinander ausziehend entfernt bzw. in der entgegengesetzten Richtung ineinander schiebt.

Neben der gezeigten axialen Ausziehrichtung kann aber bei einer nicht näher dargestellten Ausführungsform auch eine andere Bewegungsbahn vorgesehen sein, die gegebenenfalls in anderen Richtungen, insbesondere auch in Querrichtungen eine relative Lageeinstellung der Schildteile 10,12 zueinander ermöglicht. Ferner kann sich an das jeweilige Schildteil 10, 12 mindestens noch ein weiteres Schildteil (nicht dargestellt) anschließen, das gegebenenfalls mit einer vergleichbaren Verbindungseinrichtung versehen ist, wobei dann mit einem Abschirmteil Schildteile gleicher oder verschiedener Art in unterschiedlichste Richtungen zueinander relativ lageeinstellbar sind.

Die jeweilige Bewegungsbahn ist in einem Übergriff 22 des einen Schildteiles 10 geführt, der unter Anlage das andere Schildteil 12 entlang eines radialen Umfassungsbogens übergreift. Während der Übergriff 22 des einen Schildteiles 10 randseitig in die Umgebung mündet, bildet dieses gegenüberliegend eine Anschlagbegrenzung 24 für das andere Schildteil 12, entlang dessen freiem Rand aus, wobei sich die jeweilige Bewegungsbahn innerhalb des Übergriffes 22 erstreckt. Auf diese Art und Weise läßt sich über die Anschlagbegrenzung 24 die jeweilige Langlochführung 18 dergestalt entlasten, dass sichergestellt ist, dass das Führungsteil in Form der Schraube 20 nicht gegen den Rand der Langlochführung in einer Verschieberichtung (zusammengeschobener Zustand) anstoßen kann. Vorzugsweise ist die Anschlagbegrenzung 24 durch einen eingesickten Rand am haubenförmigen Schildteil 10 realisiert. Des weiteren weist das Schildteil 12, dass das jeweilige Führungsteil in Form der Schrauben 20 aufweist, randseitig zwei weitere Langlochführungen 26 auf, zur relativen Lagefestlegung des Abschirmteiles gegenüber Fahrzeug- und/oder Motorenbaukomponenten wie Katalysator-Abgassystemen (nicht dargestellt). Des weiteren weist das Schildteil 10 in Blickrichtung auf die Figuren gesehen, im oberen Bereich einen Umfassungsrand 28 auf, der mit Durchgriffsöffnungen 30 versehen, weitere Festlegemöglichkeiten für das Abschirmteil bildet.

Das jeweils eingesetzte Schildteil 10, 12 besteht aus einem ein- oder mehrlagigen Umformteil, insbesondere Blechumformteil, wobei bei einem mehrlagigen System zwischen Blechdecklagen eine isolierende Zwischenschicht aufgenommen sein kann. Insbesondere ist auch die Möglichkeit eröffnet, einlagige Schildteile mit mehrlagigen Schildteilen zu verbinden, die auch bei sehr unterschiedlichen Wärmeausdehnungsverhalten ihre eingestellte relative Lage zueinander dergestalt beibehalten, dass über die jeweilige Bewegungsbahn oder Langlochführung eine relative Ausdehnung zueinander möglich ist.

## Patentansprüche

1. Abschirmteil, insbesondere Hitzeschild für Verbrennungsmotoren, bestehend aus mindestens zwei Schildteilen (10, 12), die mittels einer Verbindungseinrichtung (14) miteinander verbindbar sind, wobei die Verbindungseinrichtung (14) eine Führungseinrichtung (16) aufweist, die eine relative Lageeinstellung der einzelnen Schildteile (10, 12) zueinander ermöglicht sowie dem Festlegen in der eingestellten Lage dient, **dadurch gekennzeichnet, dass** die Führungseinrichtung (16) in einem der Schildteile (10) mindestens eine Bewegungsbahn aufweist, längs der mindestens ein Führungsteil eines anderen, insbesondere benachbarten Schildteiles (12) verfahrbar ist, und dass die jeweilige Bewegungsbahn aus einer Langlochführung (18) besteht, die von dem zuordenbaren Führungsteil durchgriffen ist, das mit einem Überstand an seinem einen Ende das Langloch der Führung übergreift und das mit seinem anderen Ende im anderen weiteren Schildteil (12) gehalten ist.

2. Abschirmteil nach Anspruch 1, **dadurch gekennzeichnet, dass** das jeweilige in die zuordenbare Bewegungsbahn eingreifende Führungsteil ein Festlegemittel bildet, zum Festlegen der Schildteile (10, 12) in ihrer jeweils zueinander eingenommenen relativen Lage.

3. Abschirmteil nach Anspruch 1 oder 2, **dadurch gekennzeichnet, dass** das Führungsteil aus einer Schraube (20), einem Niet- oder einem Gewindebolzen gebildet ist, die mit einem Kopf oder einer Gewindemutter versehen, den Überstand bilden.

4. Abschirmteil nach einem der Ansprüche 1 bis 3, **dadurch gekennzeichnet, dass** die Schildteile (10, 12) in der Art von schalenförmigen Abdeckhauben ausgebildet sind, die im verbauten Zustand eine gemeinsame Längsausrichtung aufweisen, entlang der sich, parallel angeordnet, die jeweilige Bewegungsbahn erstreckt.

5. Abschirmteil nach einem der Ansprüche 1 bis 4, **dadurch gekennzeichnet, dass** die jeweilige Bewegungsbahn in einem Übergriff (22) des einen Schildteiles (10) geführt ist, der unter Anlage das andere Schildteil (12) übergreift.

6. Abschirmteil nach Anspruch 5, **dadurch gekennzeichnet, dass** der Übergriff (22) des einen Schildteiles (10) randseitig in die Umgebung mündet und gegenüberliegend eine Anschlagbegrenzung (24) für das andere Schildteil (12) entlang dessen freien Rand bildet, und dass sich die jeweilige Bewegungsbahn innerhalb des Übergriffes (22) erstreckt.

7. Abschirmteil nach einem der Ansprüche 1 bis 6, **dadurch gekennzeichnet, dass** das Schildteil (12), das das jeweilige Führungsteil aufweist mit mindestens einer Langlochführung (26) versehen ist, zur relativen Lagefestlegung gegenüber Fahrzeug- und/oder Motorenbaukomponenten, wie Katalysator-Abgassystemen.

8. Abschirmteil nach einem der Ansprüche 1 bis 7, **dadurch gekennzeichnet, dass** das jeweilige Schildteil (10, 12) aus einem auch mehrlagigen Umformteil, insbesondere Blechumformteil besteht.

## Claims

1. Shielding part, in particular heat shield for combustion engines, consisting of at least two shield parts (10, 12) which can be connected with each other by means of a connection means (14), whereby the connection means (14) comprises a guide means (16), which enables a relative position adjustment of the individual shield parts (10, 12) in relation to each other, as well as the affixing of the same in the adjusted position, **characterised in that** the guide means (16) comprises at least one movement path in one of the shield parts (10), along which the at least one guide part of another, in particular adjacently positioned shield part (12) can be displaced, and **in that** the relevant movement path consists of an elongated hole guide (18), which is penetrated by the associated guide part which straddles the elongated hole of the guide with its projection at one end, and is held in the other, further shield part (12) with its other end.

2. Shielding part according to Claim 1, **characterised in that** the relevant guide part engaging the associated movement path forms a fitting means for affixing the shield parts (10, 12) in their relevant relative position to each other.

3. Shielding part according to Claim 1 or 2, **characterised in that** the guide part is formed from a screw (20), a rivet, or a threaded bolt equipped with a head or a threaded nut which forms the projection.

4. Shielding part according to one of the Claims 1 to 3, **characterised in that** the shield parts (10, 12) are formed in the way of shell-shaped covering hoods, which comprise a common longitudinal expansion in their installed condition, along which the relevant movement path extends in a parallel fashion.

5. Shielding part according to one of the Claims 1 to 4, **characterised in that** the relevant movement path is located in a projection (22) of one of the shield parts (10) which engages the other shield part (12) whilst abutting against the same.

6. Shielding part according to Claim 5, **characterised in that** the projection (22) of the one shield part (10) opens to the surroundings at the edge and forms an abutment delimitation (24) for the other shield part (12) opposite along the free edge of the same, and **in that** the relevant movement path extends within the projection (22).

7. Shielding part according to one of the Claims 1 to 6, **characterised in that** the shield part (12) comprising the relevant guide part is equipped with at least one elongated hole guide (26), for the relative position adjustment in relation to vehicle and/or engine components such as catalytic converter exhaust systems.

8. Shielding part according to one of the Claims 1 to 7, **characterised in that** the relevant shield part (10, 12) consists of a possibly multi-layered deformation part, in particular a sheet metal deformation part.

## Revendications

1. Ecran, en particulier bouclier thermique pour des moteurs à combustion interne, comportant au moins deux parties d'écran (10, 12) qui peuvent être reliées l'une à l'autre à l'aide d'un dispositif de liaison (14), lequel dispositif de liaison (14) comporte un dispositif de guidage (16) qui permet de régler la position relative des parties d'écran (10, 12) les unes par rapport aux autres et qui sert également au blocage dans la position réglée,
**caractérisé en ce que** dans une des parties d'écran (10), le dispositif de guidage (16) comporte au moins une voie de déplacement le long de laquelle peut se déplacer au moins une pièce de guidage d'une autre pièce d'écran (12), en particulier voisine, et que la voie de déplacement en question est un guidage à boutonnière (18) dans laquelle par la pièce de guidage susceptible d'être associée, dont une saillie située à l'une de ses extrémités chevauche la boutonnière de guidage et dont l'autre extrémité est maintenue dans l'autre pièce d'écran (12).

2. Ecran selon la revendication 1, **caractérisé en ce que** la pièce de guidage qui pénètre dans la voie de déplacement susceptible d'être associée forme un moyen de blocage destiné à bloquer les parties d'écran (10, 12) dans la position relative qu'elles prennent respectivement l'une par rapport à l'autre.

3. Ecran selon la revendication 1 ou 2, **caractérisé en ce que** la pièce de guidage est formée par une vis (20), un boulon rivé ou fileté qui forment la saillie dans la mesure où ils comportent une tête ou un écrou.

4. Ecran selon l'une des revendications 1 à 3, **caractérisé en ce que** les parties d'écran (10, 12) se présentent sous forme de capots en forme de coque qui ont à l'état monté une orientation longitudinale commune qui est parallèle à la voie de déplacement en question.

5. Ecran selon l'une des revendications 1 à 4, **caractérisé en ce que** la voie de déplacement en question est guidée dans un chevauchement (22) de l'une des parties d'écran (10) qui chevauche avec contact l'autre partie d'écran.

6. Ecran selon la revendication 5, **caractérisé en ce que** sur le bord le chevauchement (22) de l'une des parties d'écran (10) débouche dans l'environnement et forme du côté opposé le long de son bord libre un limiteur à butée (24) pour l'autre pièce d'écran (12) et que la voie de déplacement en question s'étend à l'intérieur du chevauchement (22).

7. Ecran selon l'une des revendications 1 à 6, **caractérisé en ce que** la pièce d'écran (12) munie de la pièce de guidage en question comporte au moins un guidage à boutonnière (26) pour bloquer la position relative par rapport aux composants du véhicule et/ou du moteur, comme les systèmes de gaz d'échappement à pot catalytique.

8. Ecran selon une des revendications 1 à 7, **caractérisé en ce que** la pièce d'écran (10, 12) est une pièce conformée elle aussi à plusieurs couches, en particulier une pièce conformée en tôle.
